# EUROPEAN PATENT APPLICATION

(11) **EP 1 614 733 A1**
(43) Date of publication of application: **11.01.2006**
(21) Application number: 05014409.6
(22) Date of filing: 02.07.2005
(51) Int. Cl.: C09D 175/12, C08G 18/02, C09D 133/00

(54) **Process for producing cured coating film**

(30) Priority: 05.07.2004 JP 2004197644
(71) Applicant: Nisshinbo Industries, Inc., Tokyo (JP)
(72) Inventor: Takahashi, Ikuo, Chiba-shi Chiba (JP); Shoji, Tomoaki, Chiba-shi Chiba (JP); Nakamura, Norimasu, Chiba-shi Chiba (JP)
(74) Representative: Leifert & Steffan

(57) **Abstract**

There is provided a process for producing a cured coating film by crosslinking a crosslinkable aqueous resin with aqueous polycarbodiimide in the presence of a crosslinking accelerator made of metal carbonate soluble in water, aqueous ammonia or aqueous organic amine solution. According to the present invention, a cured coating film having a sufficient strength can be produced for a shorter period of time than conventionally.

## Description

### FIELD OF THE INVENTION

The present invention relates to a process for producing cured coating films, and more particularly to an industrially useful process for producing cured coating films having a sufficient strength for a short period of time by crosslinking an aqueous resin with polycarbodiimide.

### BACKGROUND OF INVENTION

Aqueous resins such as water-soluble resins and water-dispersible resins have been extensively used in various applications such as paints, inks, fiber-treating agents, adhesives and coating agents.

In recent years, among these applications, in particular, the need for aqueous paints such as water-soluble or water-dispersible paints have become increased because these paints using water as a solvent or a dispersing medium and containing no organic solvent are free from environmental pollution or fire risk, and further coating equipments used therefor such as brushes, rollers and spray guns as well as stains of these paints are readily cleaned or washed out with water.

The aqueous resins generally contain carboxyl groups which are introduced thereinto in order to impart a water solubility or a water dispersibility to the resins. Therefore, coating films produced from such aqueous resins tend to generate hydrolysis owing to residual carboxyl groups therein, and, as a result, tend to be deteriorated in strength, durability and appearance.

In order to improve various properties of these aqueous resins such as water resistance, there has been generally employed such a method in which the aqueous resins are used in combination with an external crosslinking agent such as aqueous melamine resins, aziridine compounds and aqueous blocked isocyanate compounds which can be reacted with carboxyl groups contained therein to form a crosslinked structure. However, the use of these crosslinking agents tends to be sometimes unsuitable owing to problems such as toxicity, short pot life, poor blending stability and low reactivity. Also, since the crosslinking reaction using these crosslinking agents proceeds while eliminating carboxyl groups of the aqueous resins, the resultant coating film can be improved in strength, water resistance, durability, etc. However, if the crosslinking agents remain partially unreacted, the resultant coating film tends to sometimes exhibit a toxicity, whereas if the carboxyl groups of the aqueous resins remain partially unreacted, the resultant coating film tends to be deteriorated in water resistance and durability, More specifically, unless the rate of reaction between the carboxyl groups of the aqueous resins and the crosslinking agents reaches 100%, various problems tend to occur. Further, the aqueous blocked isocyanate compounds having a high reactivity have such a problem that a pot life thereof is extremely short.

On the other hand, there have been studied the methods of incorporating crosslinking agents into polyurethane, or introducing a crosslinking structure into polyurethane itself. However, in these methods, the process for production of the polyurethane inevitably becomes complicated.

Typical thermosetting aqueous urethane resins are those resins in which a hydrophobic crosslinking agent having a low water dispersibility is co-dispersed by using the aqueous urethane resin as a dispersant. There have been proposed various methods in which blocked isocyanate compounds or epoxy resins as the hydrophobic crosslinking agent are co-emulsified or co-dispersed by adding and mixing the crosslinking agent in self-emulsifiable isocyanate-terminated prepolymers. However, these methods still suffer from the above problems concerning toxicity, pot life and blending stability.

Further, in recent years, there have been proposed various methods of incorporating an alkoxysilyl group as a cold-curing functional group into a polyurethane skeleton. In any of these methods, the aqueous polyurethane resins are kept stable in water by allowing the alkoxysilyl group to be hydrolyzed in water. However, once water is vaporized, the aqueous resins function as a cold-curing system which can be crosslinked while forming a siloxane bond therein. On the other hand, it has been attempted to improve a durability of the aqueous resins by previously forming a gel structure (three-dimensional crosslinked structure) within particles thereof owing to inherent properties thereof as a water dispersion. This method has been practically used, in particular, in the application field of paints. In addition, as the method of introducing a crosslinked structure in the aqueous resin, there are known the method of previously branching a prepolymer thereof, the method using polyfunctional polyamines as a chain extender, or the method of dispersing the prepolymer together with polyisocyanate and then subjecting the prepolymer to chain extension to introduce a three-dimensional structure thereinto. Further, there are known the methods of introducing a double bond into an urethane polymer skeleton and subjecting the urethane polymer having a double bond to radical polymerization or curing by air oxidation by using an unsaturated polyester polyol derived from maleic anhydride, or an alkyd polyol. Also, there are known the methods of introducing a crosslinked structure into polyurethane by previously reacting an epoxy resin or an aziridine-based crosslinking agent as an external crosslinking agent with a carboxyl group of a polyurethane skeleton in water.

However, these conventional methods are not necessarily satisfactory owing to complicated production process, poor properties of the obtained crosslinked products, or extensiveness of the crosslinked products.

Meanwhile, it is also known that carbodiimide compounds are usable as a crosslinking agent for aqueous resins. As the carbodiimide compounds usable as a crosslinking agent for aqueous resins, there is disclosed aqueous dicyclohexylmethane carbodiimide exhibiting a good reactivity and a good keeping property as well as a good handing property (for example, refer to Japanese Patent Application Laid-Open No. 2000-7642). The aqueous dicyclohexylmethane carbodiimide exhibits no toxicity and a sufficient pot life, but has the following problems. Therefore, it has been required to further improve the curing system.

That is, the film-forming process using the aqueous resins has required volatilization of water having a high latent heat and, therefore, a prolonged treating time as compared to that using solvent-type resins, resulting in adverse influence on productivity thereof. If water is volatilized for as short a time as the volatilization time of the solvent-type resins, carbodiimide may sometimes fails to exhibit a sufficient crosslinking effect. Namely, although the aqueous resins containing carbodiimide can be formed into a coating film having a practically acceptable strength if they are treated for a sufficient time, the crosslinking effect of carbodiimide becomes insufficient if the treating time is short. Therefore, it has been required to develop a curing system composed of the aqueous resins and aqueous polycarbodiimide which is capable of producing a cured coating film having a sufficient strength even for a shorter treating time than that used in conventional systems.

### SUMMARY OF THE INVENTION

An object of the present invention is to provide an industrially useful process for producing cured coating films having a sufficient strength for a shorter time than conventionally by crosslinking an aqueous resin such as aqueous urethane-based resins and acrylic resins with aqueous polycarbodiimide.

As a result of extensive researches, the inventors have found that the above object can be achieved by using as a crosslinking accelerator a specific metal carbonate soluble in water, aqueous ammonia or aqueous organic amine solution. The present invention has been accomplished on the basis of the above finding.

Thus, the present invention provides:
(1) A process for producing a cured coating film by crosslinking a crosslinkable aqueous resin with aqueous polycarbodiimide in the presence of a crosslinking accelerator made of metal carbonate soluble in water, aqueous ammonia or aqueous organic amine solution.
(2) The process according to the above aspect (1), wherein said metal carbonate soluble in water, aqueous ammonia or aqueous organic amine solution is at least one compound selected from the group consisting of alkali metal carbonate and basic transition metal carbonate.
(3) The process according to the above aspect (2), wherein said alkali metal carbonate is sodium carbonate and/or potassium carbonate.
(4) The process according to the above aspect (3), wherein said sodium carbonate and/or potassium carbonate are used in an amount of 2 to 20 parts by mass on the basis of 100 parts by mass of a solid content of the aqueous polycarbodiimide.
(5) The process according to the above aspect (2), wherein said basic transition metal carbonate is basic zinc carbonate.
(6) The process according to the above aspect (5), wherein said basic zinc carbonate is used in an amount of 0.002 to 0.2 part by mass on the basis of 100 parts by mass of a solid content of the aqueous polycarbodiimide.
(7) The process according to any of the above aspects (1) to (6), wherein said aqueous polycarbodiimide is water-soluble or water-dispersible polycarbodiimide having an end hydrophilic group.
(8) The process according to any of the above aspects (1) to (7), wherein said crosslinkable aqueous resin is a crosslinkable water-soluble or water-dispersible urethane-based resin or acrylic resin.
(9) The process according to any of the above aspects (1) to (8), comprising:
   previously mixing (A) an aqueous solution or an aqueous dispersion containing aqueous polycarbodiimide with (B) an aqueous solution containing metal carbonate or an aqueous solution containing metal carbonate, and ammonia and/or organic amine to prepare a mixed solution;
   mixing the mixed solution with (C) an aqueous solution or an aqueous dispersion containing a crosslinkable aqueous resin to prepare a coating solution; and
   applying the coating solution onto a substrate to form a coating layer, followed by curing the coating layer.
(10) The process according to the above aspect (9), wherein in the component (B), said aqueous solution containing metal carbonate is an aqueous solution containing alkali metal carbonate, and said aqueous solution containing metal carbonate, and ammonia and/or organic amine is an aqueous solution containing basic transition metal carbonate and organic amine.

### EFFECT OF THE INVENTION

According to the present invention, there can be provided an industrially useful process for producing cured coating films having a sufficient strength for a shorter period of time than conventionally by using a specific kind of metal carbonate as a crosslinking accelerator upon crosslinking an aqueous resin with aqueous polycarbodiimide.

### DETAILED DESCRIPTION OF THE INVENTION

The crosslinkable aqueous resins used as a film-forming material in the process for production of the cured coating film according to the present invention, may be appropriately selected from various resins without any particular limitation as long as the resins have a good water solubility or a good water dispersibility and are crosslinkable with carbodiimide compounds. Specific examples of the crosslinkable aqueous resins include water-soluble or water-dispersible resins having a carboxyl group in a molecule thereof such as water-soluble or water-dispersible urethane-based resins, acrylic resins and polyester-based resins. Of these resins, preferred are urethane-based resins and acrylic resins.

As the water-soluble or water-dispersible urethane-based resins containing a carboxyl group in a molecule thereof, there may be used, for example, such urethane-based resins which are produced by reacting a carboxyl-containing urethane-based prepolymer obtained from polyisocyanate compounds, carboxyl-containing polyols and/or amino acids, and polyols, with a basic organic compound and a chain extender in the presence of a solvent or water, and then removing the solvent or water from the resultant reaction solution under reduced pressure, or the like.

As the water-soluble or water-dispersible acrylic resins containing a carboxyl group in a molecule thereof, there may be used, for example, such acrylic resins which are produced by copolymerizing a polymerizable unsaturated carboxylic acid such as (meth)acrylic acid, itaconic acid, maleic acid, fumaric acid and crotonic acid, or an anhydride thereof, with (meth)acrylic esters such as methyl (meth)acrylate, ethyl (meth)acrylate, butyl (meth)acrylate, 2-ethylhexyl (meth)acrylate and 2-hydroxyethyl (meth)acrylate, acrylic monomers other than (meth)acrylic acid-based monomers such as (meth)acrylamide and (meth)acrylonitrile, and, if required, α-methyl styrene and vinyl acetate by a polymerization method such as emulsion polymerization, solution polymerization or bulk polymerization.

Also, as the water-soluble or water-dispersible polyester-based resins containing a carboxyl group in a molecule thereof, there may be used, for example, such polyester-based resins which are produced by selective mono-esterification reaction between glycol or hydroxy-terminated polyester glycol and tetracarboxylic dianhydride for chain-extension thereof.

The aqueous polycarbodiimide used as a crosslinking agent in the process for production of the cured coating film according to the present invention may be appropriately selected from conventionally known optional polycarbodiimides without any particular limitation as long as the polycarbodiimides have a good water solubility or a good water dispersibility.

As the aqueous polycarbodiimide, there may be used those having an end hydrophilic group. The aqueous polycarbodiimide may be produced, for example, by first forming an isocyanate-terminated polycarbodiimide by condensation reaction of an organic diisocyanate compound with elimination of carbon dioxide, and then adding a hydrophilic segment containing a functional group reactive with an isocyanate group to the isocyanate-terminated polycarbodiimide.

Examples of the hydrophilic segment include those derived from the following hydrophilic organic compounds (1) to (4).
(1) Quaternary ammonium salts of dialkylamino alcohol represented by the formula:

   (R¹)₂-N-R²-OH

   wherein R¹ represents a lower alkyl group; and R² represents an alkylene group having 1 to 10 carbon atoms, or a polyoxyalkylene group.
   Of these quaternary ammonium salts of dialkylamino alcohol, especially preferred are quaternary ammonium salts of 2-dimethylamino ethanol. In the case where the above quaternary ammonium salts of dialkylamino alcohol are used as the hydrophilic segment, an ionicity of the resultant polycarbodiimides is of a cation type.
(2) Quaternary ammonium salts of dialkylaminoalkyl amine represented by the formula:

   (R¹)₂-N-R²-NH₂

   wherein R¹ and R² are the same as defined above.
   Of these quaternary ammonium salts of dialkylaminoalkyl amine, especially preferred are quaternary ammonium salts of 3-dimethylamino-n-propyl amine. In the case where the above quaternary ammonium salts of dialkylaminoalkyl amine are used as the hydrophilic segment, an ionicity of the resultant polycarbodiimides is of a cation type.
(3) Alkylsulfonic acid salts having at least one reactive hydroxyl group which are represented by the formula:

   HO-R³-SO₃R⁴

   wherein R³ represents an alkylene group having 1 to 10 carbon atoms; and R⁴ represents an alkali metal.
   Of these alkylsulfonic acid salts, especially preferred is sodium hydroxypropanesulfonate. In the case where the above alkylsulfonic acid salts are used as the hydrophilic segment, an ionicity of the resultant polycarbodiimides is of an anion type.
(4) Alkoxy-end-sealed polyethyleneoxide represented by the formula:

   R⁵-O-(CH₂-CHR⁶-O-)ₘ-H

   wherein R⁵ represents an alkyl group having 1 to 4 carbon atoms; and R⁶ represents a hydrogen atom or a methyl group; and m is an integer of 4 to 30, or a mixture of the polyethyleneoxide and polypropyleneoxide.
   Of these polyethyleneoxides and mixtures thereof, especially preferred are polyethyleneoxides end-sealed with a methoxy group or an ethoxy group. In the case where the above polyethyleneoxides or mixture thereof are used as the hydrophilic segment, an ionicity of the resultant polycarbodiimides is of a nonionic type.

Examples of the organic diisocyanate compounds used for forming the above isocyanate-terminated polycarbodiimide include aromatic diisocyanate compounds, aliphatic diisocyanate compounds, alicyclic diisocyanate compounds and mixtures thereof. Specific examples of the organic diisocyanate compounds include 1,5-naphthylene diisocyanate, 4,4'-diphenylmethane diisocyanate, 4,4'-diphenyldimethylmethane diisocyanate, 1,3-phenylene diisocyanate, 1,4-phenylene diisocyanate, 2,4-tolylene diisocyanate, 2,6-tolylene diisocyanate, a mixture of 2,4-tolylene diisocyanate and 2,6-tolylene diisocyanate, hexamethylene diisocyanate, cyclohexane-1,4-diisocyanate, xylylene diisocyanate, isophorone diisocyanate, dicyclohexylmethane-4,4'-diisocyanate, methylcyclohexane diisocyanate and tetramethylxylylene diisocyanate.

The condensation reaction of the above organic diisocyanate compound with elimination of carbon dioxide proceeds in the presence of a carbodiimidation catalyst. Examples of the carbodiimidation catalyst include phospholene oxides such as 1-phenyl-2-phospholene-1-oxide, 3-methyl-2-phospholene-1-oxide, 1-ethyl-2-phospholene-1-oxide, 3-methyl-1-phenyl-2-phospholene-1-oxide, and 3-phospholene isomers thereof. Of these carbodiimidation catalysts, 3-methyl-1-phenyl-2-phospholene-1-oxide is preferred from the standpoint of a good reactivity thereof. Meanwhile, the carbodiimidation catalyst may be used in a catalytically effective amount.

The temperature used in the condensation reaction of the organic diisocyanate compound is usually in the range of about 80 to 200°C. The degree of condensation of the organic diisocyanate compound is preferably in the range of about 1 to 10. When the condensation degree falls within the above-specified range, the resultant aqueous polycarbodiimide exhibits a good dispersibility in the aqueous resin upon adding the aqueous polycarbodiimide thereto.

The temperature used upon reacting the isocyanate-terminated polycarbodiimide with the hydrophilic organic compound for adding the hydrophilic segment to the polycarbodiimide, is in the range of usually 60 to 180°C and preferably 100 to 160°C.

Of the thus produced aqueous polycarbodiimides, preferred is aqueous dicyclohexylmethane carbodiimide. The aqueous dicyclohexylmethane carbodiimide may be produced by condensing 4,4'-dicyclohexylmethane diisocyanate in the presence of the carbodiimidation catalyst to obtain isocyanate-terminated dicyclohexylmethane carbodiimide, and then reacting the thus obtained isocyanate-terminated dicyclohexylmethane carbodiimide with an organic compound having at least one hydroxyl group reactive with an isocyanate group.

In the process for production of the cured coating film according to the present invention, the metal carbonate soluble in water, aqueous ammonia or aqueous organic amine solution is used as a crosslinking accelerator. Here, the metal carbonate soluble in water, aqueous ammonia or aqueous organic amine solution means that the metal carbonate is dissolved in water, aqueous ammonia or aqueous organic amine solution in an amount of 0.02 mmol/l or more at 20°C.

Examples of the water-soluble metal carbonate include alkali metal carbonates and preferably sodium carbonate and potassium carbonate. Examples of the metal carbonate soluble in aqueous ammonia or aqueous organic amine solution include basic transition metal carbonates and preferably basic zinc carbonate. Examples of organic amines contained in the aqueous organic amine solution include triethylamine and tripropylamine.

In the process for production of the cured coating film according to the present invention, the above aqueous polycarbodiimides may be used singly or in the combination of any two or more thereof. The amount of the aqueous polycarbodiimide used is preferably in the range of 0.5 to 15 parts by mass and more preferably 1 to 10 parts by mass in terms of solid content thereof on the basis of 100 parts by mass of a solid content of the crosslinkable aqueous resin in view of a good balance between properties of the obtained cured coating film and economical production process thereof.

On the other hand, the above metal carbonates may also be used singly or in the combination of any two or more thereof. The amount of sodium carbonate or potassium carbonate used as the metal carbonate is preferably in the range of 2 to 20 parts by mass on the basis of 100 parts by mass of solid content of the aqueous polycarbodiimide in view of a good crosslinking accelerating capability and a good workability. Whereas, the basic zinc carbonate can exhibit a good crosslinking accelerating capability even when used in a smaller amount, and may be used in an amount of 0.002 to 0.2 part by mass.

Next, the preferred embodiments of the process for producing the cured coating film according to the present invention are described.

In the process of the present invention, although the order of addition of the respective components is not particularly limited, the following two embodiments are preferably used. In the first preferred embodiment, (A) an aqueous solution or an aqueous dispersion containing an aqueous polycarbodiimide, (B) an aqueous solution containing metal carbonate or an aqueous solution containing metal carbonate, and ammonia and/or organic amine , and (C) an aqueous solution or an aqueous dispersion containing a crosslinkable aqueous resin, are mixed with each other to prepare a coating solution, and then the thus prepared coating solution is applied onto a substrate to form a coating layer, followed by curing the coating layer.

In the first preferred embodiment, the concentration of resins contained in the aqueous solution or aqueous dispersion containing the crosslinkable aqueous resin as the component (C) is not particularly limited, and preferably in the range of about 15 to 50% by mass and more preferably 20 to 40% by mass from the standpoints of a good coatability of the obtained coating solution and facilitated drying of the coating layer.

In the first preferred embodiment, the concentration of polycarbodiimide contained in the aqueous solution or aqueous dispersion containing the aqueous polycarbodiimide as the component (A) is not particularly limited, and preferably in the range of about 20 to 60% by mass and more preferably 30 to 50% by mass from the standpoints of a good handling property thereof.

Also, the concentration of the metal carbonate contained in the aqueous solution containing the metal carbonate or the aqueous solution containing the metal carbonate, and ammonia and/or organic amine as the component (B) may be appropriately selected depending upon a solubility of the metal carbonate in a solvent used for dissolving the metal carbonate, and is preferably as high as possible. Also, when aqueous ammonia or aqueous organic amine solution is used as the solvent, the concentration of ammonia or organic amine in the solvent is preferably adjusted to the vicinity of a saturated concentration thereof.

Thus, in the first preferred embodiment of the present invention, the components (A), (B) and (C) are mixed with each other to prepare a coating solution. In this case, the order of mixing of the components (A), (B) and (C) is not particularly limited.

The thus prepared coating solution is applied onto a suitable substrate to form a coating layer, and then the coating layer is cured to produce a cured coating film. Meanwhile, additive components added if desired, as well as the coating method and curing method are explained in detail later.

Next, the second preferred embodiment of the present invention is described. In the second preferred embodiment, there is provided the process for production of the cured coating film which comprises the steps of previously mixing (A) an aqueous solution or an aqueous dispersion containing aqueous polycarbodiimide with (B) an aqueous solution containing metal carbonate or an aqueous solution containing metal carbonate, and ammonia and/or organic amine to prepare a mixed solution; mixing the mixed solution with (C) an aqueous solution or an aqueous dispersion containing a crosslinkable aqueous resin to prepare a coating solution; and then applying the thus prepared coating solution onto a substrate to form a coating layer, followed by curing the coating layer.

Thus, in the second preferred embodiment of the present invention, the aqueous solution or aqueous dispersion containing the aqueous polycarbodiimide, and the aqueous solution containing the metal carbonate or the aqueous solution containing the metal carbonate, and ammonia and/or organic amine which are used as the components (A) and (B), respectively , in the first preferred embodiment are previously mixed with each other to prepare a mixed solution. In this case, glycols such as 1,4-butane diol may be added to the mixed solution as a stabilizer for the aqueous polycarbodiimide.

Then, the thus prepared mixed solution is mixed with the aqueous solution or aqueous dispersion containing the crosslinkable aqueous resin which is used as the component (C) in the first embodiment to prepare a coating solution. The thus prepared coating solution is applied onto a suitable substrate to form a coating layer, and then the coating layer is cured to thereby produce the aimed cured coating film.

The coating solution prepared in the first and second preferred embodiments of the present invention may optionally contain various additives such as pigments, fillers, leveling agents, surfactants, dispersants, plasticizers, ultraviolet light absorbers and antioxidants according to requirements.

Also, the coating solution may be applied onto the suitable substrate for forming the coating layer by conventionally known methods such as brushing, padding, spray coating, hot spray coating, airless spray coating, roller coating, curtain-flow coating, cast coating, dip coating and knife edge coating.

Further, the curing treatment may be usually performed by the method of heat-treating the coating film in order to promote a crosslinking reaction thereof. The heat-treating method is not particularly limited, and the heat treatment may be performed, for example, by the methods using an electric heating oven, a hot air heating oven, an infrared ray heating oven, a high-frequency heating oven, etc.

In the process for production of the cured coating film according to the present invention, upon producing the cured coating film by crosslinking the aqueous resin with the aqueous polycarbodiimide, a specific kind of metal carbonate is used as a crosslinking accelerator. As a result, at least one or whole of the following effects can be achieved.
(1) The cured coating film having a sufficient strength can be produced for a shorter treating time than conventionally.
(2) The strength of the obtained cured coating film becomes more higher if the same treating time as conventionally is used.
(3) The process requires no complicated procedures, and can be completed only by adding desired materials to the aqueous resin similarly to the conventional methods.
(4) Only by adding the crosslinking accelerator to the aqueous polycarbodiimide solution, the resultant curing system can be handled similarly to the conventional two-part systems.
(5) Production costs are kept low since inexpensive materials such as sodium carbonate and basic zinc carbonate are used as the crosslinking accelerator.

### EXAMPLES

The present invention is described in more detail by referring to the following examples and comparative examples. However, it should be noted that the following examples are only illustrative and not intended to limit the invention thereto.

### PRODUCTION EXAMPLE 1

Five hundred seventy eight grams of 4,4'-dicyclohexylmethane diisocyanate was reacted in the presence of 2.9 g of 3-methyl-1-phenyl-2-phospholene-1-oxide as a carbodiimidation catalyst at 180°C for 18 h to obtain isocyanate-terminated dicyclohexylmethane carbodiimide having a polymerization degree of 6.3 to 6.9. Next, 333.0 g of polyethyleneoxide monomethyl ether having a polymerization degree of 8 was added to the thus obtained isocyanate-terminated dicyclohexylmethane carbodiimide to conduct the reaction therebetween at 150°C for 5 h. After completion of the reaction, the obtained reaction solution was cooled to 50°C, and then 1478 g of distilled water was gradually added thereto, thereby obtaining a light-yellow transparent carbodiimide solution (concentration: 40% by mass; NCN group equivalent: 385).

### EXAMPLE 1

A mixed solution composed of 0.498 g of water and 0.498 g of 1,4-butane diol was mixed with 0.08 g of sodium carbonate available from Kokusan Kagaku Co., Ltd., and the resultant mixture was stirred for 10 min. At this time, it was confirmed that sodium carbonate added remained partially undissolved. Successively, 2 g of the carbodiimide solution (solid concentration: 40% by mass; NCN group equivalent: 385) produced in PRODUCTION EXAMPLE 1 was added to the resultant mixture, followed by stirring the mixture to completely dissolve sodium carbonate therein (solution A).

One gram of a blue pigment "DYE PYROXIDE BLUE #3490(E)" available from Dainichiseika Kogyo Co., Ltd., was dispersed in 100 g of an aqueous urethane resin "Neo Rez R-960" (solid content: 33% by mass; acid value: 80 mg KOH/g) available from Avecia Limited (solution B). Meanwhile, the blue pigment was added for the purpose of facilitating the observation of change in conditions upon the subsequent rubbing test. Four grams of the thus obtained solution B was intimately mixed with 0.256 g of the above solution A under stirring. The resultant coating solution was applied onto a polyethylene terephthalate (PET) film using a 100 µm-pitch bar coater to form a coating film thereon. The thus coated PET film was heated in a dryer at 80°C for 15 min. After 15 min, the film was taken out of the dryer and then naturally cooled in atmospheric air to room temperature. The surface of the resultant coating film was rubbed by an about 1 cm-square four-folded absorbent cotton impregnated with three droplets of methyl ethyl ketone while applying a predetermined pressing force thereto. The rubbing operation was repeated until the coating film was peeled off from the PET film substrate, and the number of times of the rubbing operation required was recorded.

The rubbing test was conducted three times to obtain an average value of the numbers of times of the rubbing operation.

Further, the solution A was filled in a closed container, and the container was placed in a constant temperature oven maintained at 50°C. The solution A filled in the container was taken out of the oven at predetermined time intervals. Then, in the same manner as described above, after the solution A was mixed with the solution B, the obtained coating solution was applied onto a PET film, and then the resultant coating film was subjected to the rubbing test. The rubbing test using the solution A which was allowed to stand at 50°C for 3 days was compared to that using the solution A which was allowed to stand at 50°C for 7 days. The results are shown in Table 1.

### EXAMPLE 2

A mixed solution composed of 0.196 g of water and 0.391 g of 1,4-butane diol was mixed with 0.08 g of potassium carbonate, and the resultant mixture was stirred for 10 min. Successively, 2 g of the carbodiimide solution produced in PRODUCTION EXAMPLE 1 was added to the resultant mixture, followed by stirring the mixture to completely dissolve potassium carbonate therein (solution C).

Then, the same procedure as in EXAMPLE 1 was repeated except that 0.222 g of the solution C instead of the solution A was added to 4 g of the solution B, thereby forming a coating film and subjecting the coating film to the rubbing test.

Further, the solution C was filled in a closed container, and the container was placed in a constant temperature oven maintained at 50°C. The solution C filled in the container was taken out of the oven at predetermined time intervals. Then, in the same manner as described above, after the solution C was mixed with the solution B, the obtained coating solution was applied onto a PET film, and then the resultant coating film was subjected to the rubbing test. The rubbing test using the solution C which was allowed to stand at 50°C for 3 days was compared to that using the solution C which was allowed to stand at 50°C for 7 days. The results are shown in Table 1.

### COMPARATIVE EXAMPLE 1

The same procedure as in EXAMPLE 1 was repeated except that upon preparation of the solution A, no sodium carbonate was used to prepare a solution composed of carbodiimide solely (solution A'), thereby conducting the rubbing test. The results are shown in Table 1.

**TABLE 1**

| | Crosslinking agent | Number of times of rubbing operation | | |
|---|---|---|---|---|
| | Crosslinking accelerator | 0 day | 3 days | 7 days |
| Example 1 | Carbodiimide + Sodium carbonate | 40.7 | 64.7 | 40.7 |
| Example 2 | Carbodiimide + Potassium carbonate | 30.3 | 42.3 | 36.0 |
| Comparative Example 1 | Carbodiimide | 29.3 | 37.7 | 34.0 |

As is apparent from Table 1, it was confirmed that the coating film prepared from the coating solution containing sodium carbonate or potassium carbonate exhibited a higher strength than that prepared from the coating solution containing carbodiimide solely.

### EXAMPLE 3

A mixture composed of 5.56 mL of triethylamine and about 90 mL of distilled water was intimately stirred, and further mixed with distilled water to adjust a total volume of the solution to 100 mL, thereby preparing an aqueous solution containing about 0.55 mol/L of triethylamine.

Then, 11.3 mg of basic zinc carbonate available from Wako Junyaku Co., Ltd., was added to the above aqueous triethylamine solution, and the resultant mixture was intimately stirred. Although preparation of a 0.2 mmol/L basic zinc carbonate aqueous solution was estimated if the basic zinc carbonate was completely dissolved therein, a slight amount of insoluble components remained in the solution. Therefore, the insoluble components were removed by decantation to separate a supernatant solution therefrom, and the supernatant solution was used as a test solution.

To 0.132 mL of the thus obtained aqueous basic zinc carbonate solution was added 0.165 g of the carbodiimide solution obtained in PRODUCTION EXAMPLE 1 (solution D).

Then, the same procedure as in EXAMPLE 1 was repeated except that the solution D instead of the solution A was added to 4 g of the solution B, thereby forming a coating film and subjecting the coating film to the rubbing test.

Further, the solution D was filled in a closed container, and the container was placed in a constant temperature oven maintained at 50°C. The solution D filled in the container was taken out of the oven at predetermined time intervals. Then, in the same manner as described above, after the solution D was mixed with the solution B, the obtained coating solution was applied onto a PET film, and then the resultant coating film was subjected to the rubbing test. The rubbing tests using the solutions D which were allowed to stand at 50°C for 3 days, 7 days and 14 days, respectively, were compared to each other. The results are shown in Table 2.

### COMPARATIVE EXAMPLE 2

The same procedure as in EXAMPLE 3 was repeated except that upon preparation of the solution D, no basic zinc carbonate was used to prepare a solution composed of the carbodiimide solely (solution D'), thereby conducting the rubbing test. The results are shown in Table 2.

**TABLE 2**

| | Crosslinking agent | Number of times of rubbing operation | | | |
|---|---|---|---|---|---|
| | Crosslinking accelerator | 0 day | 3 days | 7 days | 14 days |
| Example 3 | Carbodiimide + Basic zinc carbonate | 33.3 | 42.0 | 51.3 | 37.3 |
| Comparative Example 2 | Carbodiimide | 24.3 | 24.7 | 33.0 | 27.0 |

As is apparent from Table 2, it was confirmed that the coating film prepared from the coating solution to which basic zinc carbonate was added exhibited a higher strength than that prepared from the coating solution to which carbodiimide solely was added.

### EXAMPLE 4

The same procedure as in EXAMPLE 3 was repeated except that a coating solution prepared by adding the solution D to the solution B was applied onto a PET film using a 100 µm-pitch bar coater, thereby forming a coating film thereon. The thus obtained coating film was allowed to stand at room temperature (25°C), and then subjected to the rubbing test at predetermined time intervals by the same method as in EXAMPLE 1. The results are shown in Table 3.

### COMPARATIVE EXAMPLE 3

The same procedure as in EXAMPLE 4 was repeated except that the solution composed of the carbodiimide solely (solution D') as prepared in COMPARATIVE EXAMPLE 2 was used instead of the solution D. The results are shown in Table 3.

**TABLE 3**

| Elapsed time (h) | Number of times of rubbing operation | |
|---|---|---|
| | Example 4 | Comparative Example 3 |
| | Carbodiimide + Basic zinc carbonate | Carbodiimide |
| 5 | 18.7 | 16.0 |
| 24 | 38.0 | 28.0 |
| 48 | 52.0 | 33.2 |
| 72 | 49.0 | 35.0 |
| 96 | 50.7 | 47.3 |

As is apparent from Table 3, it was confirmed that when using the coating solution to which the basic zinc carbonate was added, the coating film having a high strength was produced for a shorter period of time.

### EXAMPLE 5

One gram of a blue pigment "DYE PYROXIDE BLUE #3490(E)" available from Dainichiseika Kogyo Co., Ltd., was dissolved in 100 g of an aqueous urethane resin "Neo Rez R-960" available from Avecia Limited (solution E). Meanwhile, the blue pigment was added for the purpose of facilitating the observation of change in conditions upon the subsequent rubbing test. Separately, 66 mg of sodium carbonate was dissolved in 0.5 mL of distilled water (solution F).

Next, 4 g of the thus obtained solution E, 0.05 mL of the thus obtained solution F and 0.165 g of the carbodiimide solution obtained in PRODUCTION EXAMPLE 1 were mixed with each other. At this time, it was confirmed that a mass ratio between solid contents of the aqueous urethane resin, carbodiimide and sodium carbonate was 100: 5: 0.5.

Using the thus obtained mixed solution as a coating solution, a coating film was produced and subjected to the rubbing test by the same method as in EXAMPLE 1. The results are shown in Table 4.

### EXAMPLE 6

Sixty six milligrams of potassium carbonate was dissolved in 0.5 mL of distilled water (solution G). Next, 4 g of the solution E obtained in EXAMPLE 5, 0.05 mL of the thus obtained solution G and 0.165 g of the carbodiimide solution obtained in PRODUCTION EXAMPLE 1 were mixed with each other. At this time, it was confirmed that a mass ratio between solid contents of the aqueous urethane resin, carbodiimide and potassium carbonate was 100: 5: 0.5.

Using the thus obtained mixed solution as a coating solution, a coating film was produced and subjected to the rubbing test by the same method as in EXAMPLE 1. The results are shown in Table 4.

### COMPARATIVE EXAMPLE 4

The same procedure as in EXAMPLE 5 was repeated except that no sodium carbonate was used upon preparation of the solution F, thereby forming a coating film and then subjecting the coating film to the rubbing test. The results are shown in Table 4.

**TABLE 4**

| | Crosslinking agent | Number of times of rubbing operation |
|---|---|---|
| | Crosslinking accelerator | |
| Example 5 | Carbodiimide + Sodium carbonate | 133.3 |
| Example 6 | Carbodiimide + Potassium carbonate | 105 |
| Comparative Example 4 | Carbodiimide | 66.7 |

### EXAMPLE 7

A mixture composed of 11.3 mg of basic zinc carbonate and 100 mL of a saturated aqueous triethylamine solution was intimately stirred. Although preparation of a 0.2 mmol/L basic zinc carbonate solution was estimated if the basic zinc carbonate was completely dissolved therein, a slight amount of insoluble components remained in the solution. Therefore, a supernatant solution was separated from the insoluble components by decantation (solution H).

Next, 4 g of the solution E obtained in EXAMPLE 5, 0.132 mL of the thus obtained solution H and 0.165 g of the carbodiimide solution obtained in PRODUCTION EXAMPLE 1 were mixed with each other. At this time, it was confirmed that a mass ratio between solid contents of the aqueous urethane resin and carbodiimide was 100: 5. In addition, the amount of the basic zinc carbonate solution added was about 3.3% by mass on the basis of 4 g of the solution E assuming that the specific gravity thereof was 1.

Using the thus obtained mixed solution as a coating solution, a coating film was produced and then subjected to the rubbing test by the same method as in EXAMPLE 1. The results are shown in Table 5.

### COMPARATIVE EXAMPLE 5

The same procedure as in EXAMPLE 7 was repeated except that no basic zinc carbonate was used upon preparation of the solution H, thereby forming a coating film and then subjecting the coating film to the rubbing test. The results are shown in Table 5.

**TABLE 5**

| | Crosslinking agent | Number of times of rubbing operation |
|---|---|---|
| | Crosslinking accelerator | |
| Example 7 | Carbodiimide + Basic zinc carbonate | 66.0 |
| Comparative Example 5 | Carbodiimide | 40.7 |

In the process for production of a cured coating film according to the present invention, when an aqueous resin such as aqueous urethane-based resins and acrylic resins is crosslinked with aqueous polycarbodiimide to produce the cured coating film, a specific kind of metal carbonate is used as a crosslinking accelerator. As a result, it is possible to produce a cured coating film having a sufficient strength for a shorter period of time than conventionally. The process of the present invention can be used in various application fields such as paints, inks, fiber treating agents, adhesives and coating agents.

## Claims

1. A process for producing a cured coating film by crosslinking a crosslinkable aqueous resin with aqueous polycarbodiimide in the presence of a crosslinking accelerator made of metal carbonate soluble in water, aqueous ammonia or aqueous organic amine solution.

2. The process according to claim 1, wherein said metal carbonate soluble in water, aqueous ammonia or aqueous organic amine solution is at least one compound selected from the group consisting of alkali metal carbonate and basic transition metal carbonate.

3. The process according to claim 2, wherein said alkali metal carbonate is sodium carbonate and/or potassium carbonate.

4. The process according to claim 3, wherein said sodium carbonate and/or potassium carbonate are used in an amount of 2 to 20 parts by mass on the basis of 100 parts by mass of a solid content of the aqueous polycarbodiimide.

5. The process according to claim 2, wherein said basic transition metal carbonate is basic zinc carbonate.

6. The process according to claim 5, wherein said basic zinc carbonate is used in an amount of 0.002 to 0.2 part by mass on the basis of 100 parts by mass of a solid content of the aqueous polycarbodiimide.

7. The process according to any of claims 1 to 6, wherein said aqueous polycarbodiimide is water-soluble or water-dispersible polycarbodiimide having an end hydrophilic groups.

8. The process according to any of claims 1 to 7, wherein said crosslinkable aqueous resin is a crosslinkable water-soluble or water-dispersible urethane-based resin or acrylic resin.

9. The process according to any of claims 1 to 8, comprising:
previously mixing (A) an aqueous solution or an aqueous dispersion containing aqueous polycarbodiimide with (B) an aqueous solution containing metal carbonate or an aqueous solution containing metal carbonate, and ammonia and/or organic amine to prepare a mixed solution;
mixing the mixed solution with (C) an aqueous solution or an aqueous dispersion containing a crosslinkable aqueous resin to prepare a coating solution; and
applying the coating solution onto a substrate to form a coating layer, followed by curing the coating layer.

10. The process according to claim 9, wherein in the component (B), said aqueous solution containing metal carbonate is an aqueous solution containing alkali metal carbonate, and said aqueous solution containing metal carbonate, and ammonia and/or organic amine is an aqueous solution containing basic transition metal carbonate and organic amine.
